# EUROPEAN PATENT APPLICATION

(11) **EP 2 133 673 A1**
(43) Date of publication of application: **16.12.2009**
(21) Application number: 08157926.0
(22) Date of filing: 10.06.2008
(51) Int. Cl.: G01J 3/46, G01J 3/50, A45D 44/00, B01F 13/10

(54) **Color Consultation System for a Hair Salon**

(71) Applicant: Wella Aktiengesellschaft, 64572 Darmstadt (DE)
(72) Inventor: Lankhof, John, 61389 Schmitten (DE); Hackl, Achim, 63456 Hanau (DE); Merz-Zähringer, Isabelle, 64297 Darmstadt (DE); Schmenger, Jürgen, 64331 Weiterstadt (DE)

(57) **Abstract**

A color consultation system for a hair salon is proposed with which an existing color of human hair can be recognized and a hair color treatment can be prepared in order to change the color of the hair, consisting of
- a measuring device (1) for detection of the hair color
- a unit (2) for receiving the data from the measuring device (1)
- a device (3) for input of at least one color parameter
- a display unit (4) for display of a measurement parameter or color parameter
- a processor (5) for calculation of the components of a desired color for the hair, as well as
- a mixing device (7) and an output device (6) for solid components.

## Description

The subject matter of the application pertains to a system for recognizing an existing hair color, consultation with a customer, manufacturing a hair color treatment and use of the hair color treatment with the goal of producing a temporary or permanent hair coloring.

It is known to apply wash-out or permanent hair color to a human head of hair in order to temporarily or permanently realize a desired color. The hair color can be provided with or without the use of peroxide. It can be prepared in granular, powder, particle, cream, gel, crème gel or liquid form. For example, such a system for preparation of granular mixtures for hair coloring purposes is known from EP 1817975 A1.

Aside from being performed through visual recognition, an existing hair color of a customer can also [sic] as by means of measurement technology. US 2004/0000015 A1 discloses a technique for the measurement of hair color. An optical reflectance spectrum within the visible frequency range is thereby measured. The spectrum is then analyzed. Finally, an attainable hair color is displayed by means of a hair color spectrum, whereby a bleaching process can be considered or scheduled. The hair color treatment can then be prepared and mixed with regard to its components. Similar systems are known from publications US 2006/0195300 A1, US 7,110,117 B2, US 7,304,739 B2 and US 2007/0159290 A1, WO 2006/134429 A2 and US 6,490,492 B1.

The publications US 6,330,341 B1 and WO 96/41139, which describe among other things how measured colors can be recorded in tabular fashion and used for the manufacturing of hair color treatments, also disclose a measurement of reflectance spectrums of visible light falling on hair.

In principle, the data thus measured or generated can be transferred via wires or wirelessly by means of a transmitter in order to provide for their usage on a computer screen, (for example for a color or image simulation), a palm, a user interface, a printer, a color table, a customer consultation system or a sales software. Corresponding technologies are known from EP 1817976 A1, US 2005/0036677 A1, US 7,006,657 B2 and EP 1147722 B1.

The known systems have the disadvantage that they are always restricted and therefore not universally applicable.

The object is thus based on removing these disadvantages.

The object is achieved according to claim 1. A color consultation system for a hair salon is thereby proposed. With this color consultation system, an existing color of human hair can be recognized and a hair color treatment can be prepared in order to change the color of the hair. The color consultation system consists of:
- a measuring device for recognition of hair color
- a unit for receiving the data from the measuring device
- a device for input of at least one color parameter
- a display unit for display of a measurement parameter or a color parameter
- a processor for calculation of the components of a desired color for the hair, as well as
- a hair color that is suited to on the one hand reduce units needing to be stocked while on the other hand being able to create any hair color
- a hair color that is suited to be easily created in the salon for a single head application
- an output and a mixing device for granule, powder or particle components.

The proposed color consultation system has the advantage of being universally applicable. A hair color can thus be recognized by means of a measuring device. The visual ability of the hairdresser or a technical measuring device is suitable in that regard. Data of the hair color are then fed into a device for receiving the data. In addition to this, a device for input is supplied with at least one color parameter in order to attain the desired hair color. A processor calculates the necessary components of the desired color and an output device indicates the components. The proposed color consultation system can be expanded with a series of useful devices. The system can put out a modification or a mixing instruction which agglomerates desired amounts of granule, powder or particles of hair color to allow simple manual or automatic dosing of single application hair color.

A hair dye is mixed from basic components with an addition of peroxide. The proposed system is adapted to single amounts of about 0.03 g. It can deliver or predict amounts from 0.01 to 1 g, preferably from 0.03 to 0.8 g. So there is no need of fillers in the basic color components. When there are no fillers or only few filler in the solid hair color, the color can be produced cheaper. The system is so precise that small amounts of basis colors (red, blue, yellow etc.) can be used to mix a desired hair dye without the need of adding fillers.

The prior art uses fillers in creams because the mixing systems can only handle bigger amounts of basic creams.

Advantageous embodiments of the proposed hair consultation system are described in claims 2 to 10.

A hair color treatment can be manufactured in a simple manner when a mixing device is provided for mixing the hair color treatment or for preparation of the hair color components. It is thereby advantageous if the hair color can be selected from an assortment with multiple hair colors or ideally multiple color components to create any hair color on demand. The hair color treatments or color components can then be prepared in granular, powder or particle form. Having a non-liquid or cream form makes the ideal of creating of a hair color on demand in the correct precision possible. In addition, a container of peroxide for preparation of the hair color treatment can be provided.

A manually graspable measuring device which can be set on the hair or held up to it is suitable as a mobile unit for measuring the visible spectral range of light reflected from the hair particularly that emitted from the device, in order to measure the existing color of the hair. The measuring device can thereby transmit at least one parameter of the hair color measurement to the processor via a cable, or wirelessly by means of a transmission-and-reception system. Algorithms for processing the measured values are known from the corresponding publications.

As an alternative to measuring the hair directly and directly at the customer, the subject of an embodiment presents the possibility that the color consultation system is provided for removal of an end of a strand of hair and for detection of the hair color at a measuring device connected to the processor. It is sufficient if either a portion of the spectral range which preferably has wavelengths of 400 to 800nm or the entire spectral range is provided for measurement. For better processing of the data, it is advantageous if the unit for receiving the data from the measuring device possesses storage and preferably an additional processor.

The display unit can consist of one screen or two screens for display of a respective hair color. The components to be combined for a desired color treatment to be manufactured can be printed out by a printer or displayed by a display or screen.

The measurement values and/or the components of a desired color can be compared to each other by means of a mathematical algorithm or using a collection of index cards. For better handling of the index cards, these can be placed in a receptacle or on a carousel so that they can be examined one after another in a simpler manner.

A mixing device can have a plurality of individual containers for holding different hair color treatments or components and respectively dispense from these containers a partial quantity (for example in granular form) in order to prepare a mixture of different color components or to mix these, in particular using a peroxide solution. A simple execution is thereby achieved if one valve per container is provided for opening and closing a downward facing outlet of the container, a control device is provided for operation of the valves, and there is a collection unit underneath the containers for outputting the dispensed product through an outlet into a vessel.

In further advantageous embodiments the color consultation system can possess a keyboard which serves for the input of data into the processor and a portable pocket computer with a screen and with input keys can be part of the consultation system.

In order to better compare a previous color situation with a subsequent color situation, or in order to better compare two color results with each other, it is proposed that a screen be divided into two screen partitions on which different displays of colors can be depicted, or that two separate screens are provided per display device. An even greater amount of color information is achieved if a plurality of screen partitions or screens is provided. A good observation of a selected picture and a possibility of introducing more alternatives are thereby achieved if a larger screen is provided for the display of a representation of a customer request or an output situation and a series of smaller screens are provided for the display of alternatives.

Data regarding color treatments, color components or hair colors can be saved and recalled if the screen or processor has a connection for a USB stick in order to transfer these data to or from the processor.

A mixing device could have a series of containers with a respective piston for emptying the container. In the case of a granule hair color treatment or given use of granules as components for preparation of a hair color treatment, the components can also be dispensed flowing freely downwards.

A scale and a brush, coloring comb or color applicator are reasonable utensils for weighing and applying the color treatment product.

It is advantageous if a processor of the color consultation system is connected via an Internet connection to a database for hair color treatments or colors of hair. Data of customers and in relation to hair colors or color trends can then be accessed over the Internet and used in a hair salon.

Catalog systems are suitable for input or selection of data. In this case or in general, an input or selection of data can be performed by means of a touch screen, a mouse or speech recognition.

A program for supporting or for operation of the color consultation system can be provided for use on the part of an end user or a hairdresser, or it can be designed for both.

The program can present pictures (for example with particular colors or hairstyles for a picture or a video sequence of the customer or another person) for selection and query with regard to a desired color. It can also be possible to make a selection according to pictures or according to words, to display a selection as well as options for this selection, for example different color tones, or to recommend a color and a product for hair coloring depending on the type and data of a customer.

In the following the proposed color consultation system is described in detail using figures representing exemplary embodiments. They show:

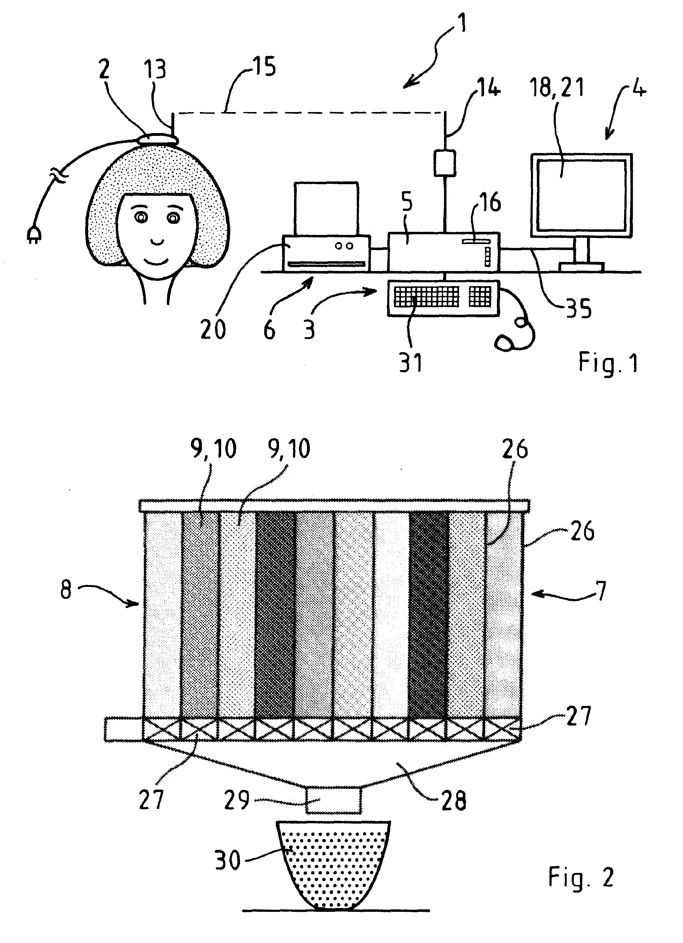

Figure 1 a color consultation system with a spectral measuring device for recognizing a hair color, a screen as a display unit for display of measurement and color parameters, a computer for calculation of the components of a desired color for the hair under consideration of wirelessly transmitted measurement data, and a printer for the output of matching hairstyle trends and trend colors;
Figure 2 a mixing device for mixing the hair color treatment, consisting of a series of containers that respectively contain granules of a specific base color;

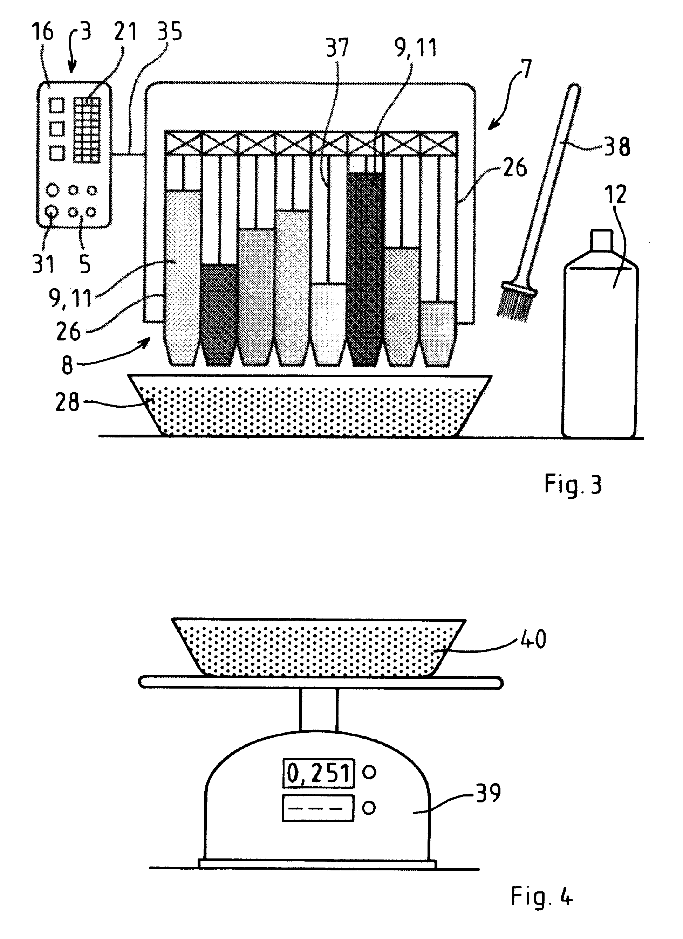

Figure 3 a mixing device with motor driven pistons for emptying the containers, each containing a base color powder for hair coloring, with an input device for color parameters;
Figure 4 a scale for weighing the color components;

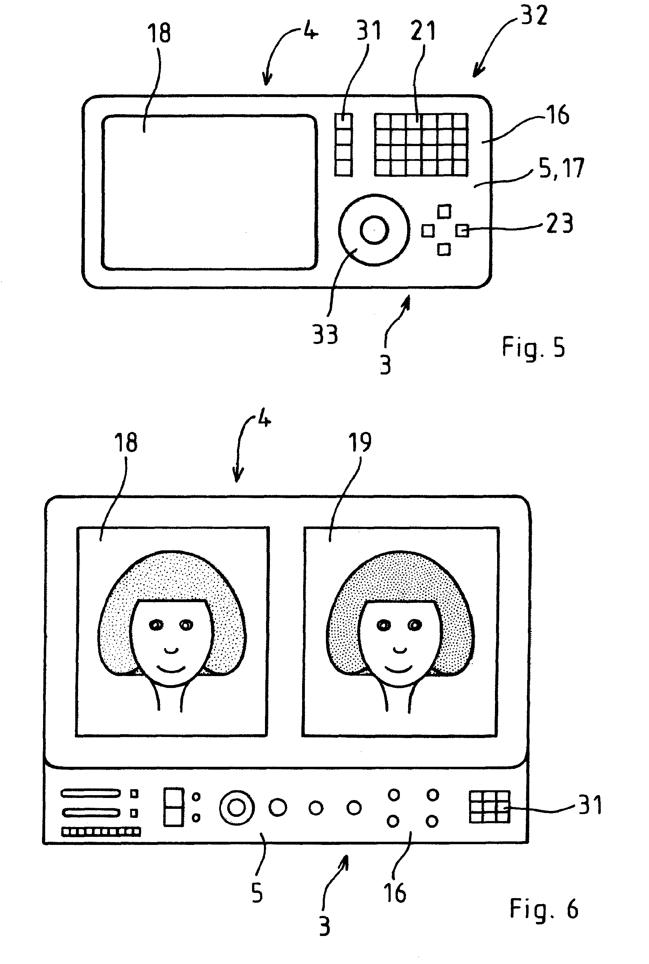

Figure 5 a color processor for the input of desired colors and for the output of color mixing information and color data;
Figure 6 a processor with a screen for simultaneous presentation of two color results or an input and a desired state;

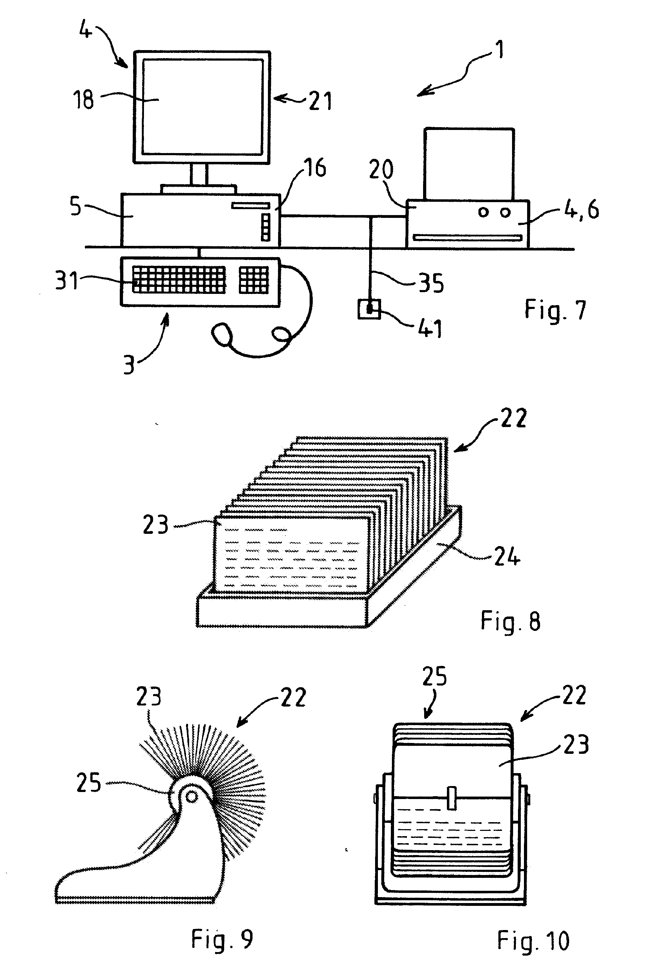

Figure 7 a color consultation system which accesses data over the Internet which can be retrieved from a central information point;
Figure 8 an index card system with customer data;
Figure 9 a rotary card file system with color results,
Figure 10 the subject of figure 9 rotated by 90 degrees,

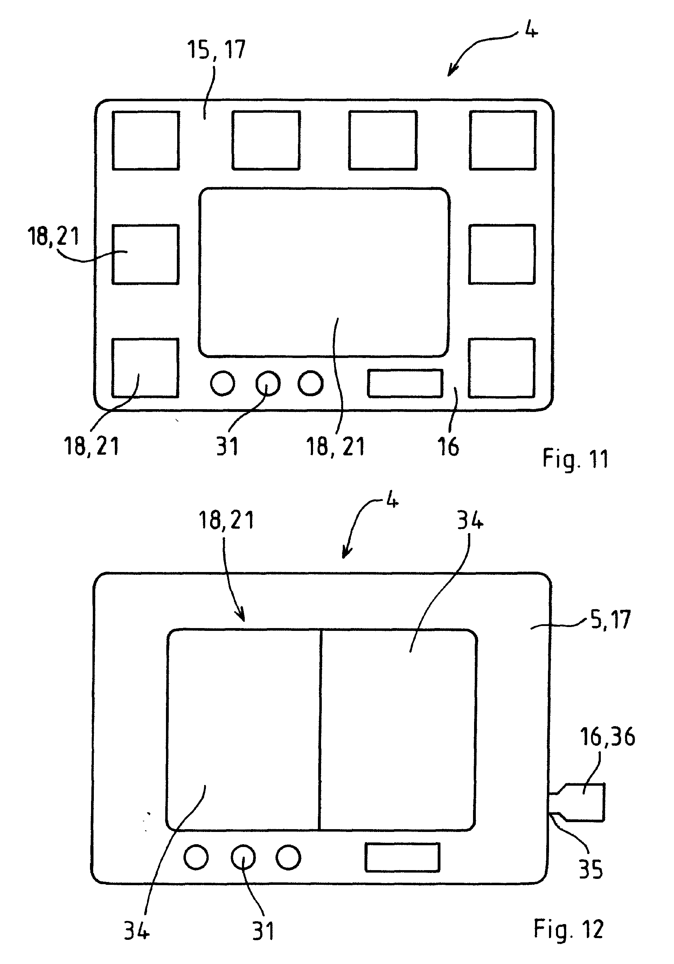

Figure 11 a processor with a central screen and a series of peripheral screens, as well as
Figure 12 a processor with a divided screen and a USB storage stick.

In a color consultation system for a hair salon with which an existing color of human hair can be recognized and a hair color can be prepared in order to change the color of the hair, a measuring device 1 serves for detection of the hair color and as a unit 2 for receiving the data of the measuring device 1 via a device 3 for input of at least one color parameter; a display unit 4 serves to display a measurement parameter or a color parameter; and a processor 5 serves for calculation of components of a desired color for the hair, it is possible to operate an output unit 6 for output or display of the components in order to then display the composition of a hair color treatment after the recognition of a preexisting color of hair. Finally, a mixing device 7 serves to manufacture the necessary hair color treatment. In this multiple color components 9 can be selected and prepared from an assortment 8 of several base color components. The color components 9 can thus be available in granular form 10 or powder form 11 and can be combined with peroxide 12 as a mixture.

The measuring device 1 has a mobile unit for measuring the visible spectral range of the light reflected from the hair and transmits parameters of the hair color measurement to the processor 5 by means of a transmitter system 13 and a receiver system 14. A section of the spectrum of the wavelength range reflected from the hair from 400 to 800 nm is thereby measured and sent to the receiver system 14.

The unit 2 for receiving data can use the storage 16 of an additional processor 17 (which is designed as a hand-held device in the type and manner of a manually operated color computer) in order to utilize an additional color consultation.

In a further exemplary embodiment, the display unit 4 can have two screens 18, 19 in order to show two possible color results, and a collection 22 of index cards 23 can be provided in a receptacle 24 or on a carousel 25 in order to serve for a color consultation.

A mixing device 7 has a plurality of individual containers filled with different base color components in granular form (or in another free-flowing solid product form). A valve 27 for opening and closing a downward facing outlet of the container 26 is provided per each container 26. A control device 28 is provided for operation of the valve 27. A collection unit 28 underneath the container 26 serves to output the dispensed product through an outlet 29 into a vessel 30.

Data or customer requests can be input by means of a keyboard 31 into the processor 5. A similar process is possible in a pocket computer 32 by means of input keys 33.

For a better overview of possible color results, a screen partition 34 or a screen can respectively be used for the display of an actual or desired state, whereby different hairstyles and/or different color results are displayed. It is advantageous to provide a plurality of screen partitions 34 or screens 18 for a large selection. A particularly clear arrangement is depicted by a centrally aligned, somewhat larger screen 12 for display of a representation of a customer request or an output situation and a series of smaller screens 18 around the periphery for display of alternatives to the central picture.

External data can be used by the color consultation system if these are supplied via a connection 35 from a USB memory stick 36. Data of the color consultation system can also be transferred in the reverse direction. This handling of data is also possible in similar ways over an Internet connection 41.

If containers 26 with respective pistons 37 for emptying the containers 26 are installed in a mixing device 7, paste or cream type color components can be discharged. A reactive hair color can then be applied to the hair by means of a brush 38 after the color components have been set on a scale 39 with a product receptacle 40 with peroxide.

Data or selection criteria can be input with a mouse 42. The corresponding programs can be designed for the end user and/or the hairdresser.

The following methods and apparatus can be used:
a) A color measuring instrument for use in identifying a particular classification from a table and a database that identifies appropriate coloring agents based on a selection of coloring actions from a menu and the classifications of hair color.
b) A system for determining hair color treatment, including a processor. The processor is configured for: receiving as input an initial spectrum of a sample of hair, the initial spectrum having a wavelength range; calculating a new spectrum of the hair due to a hypothetical hair color treatment as a direct function of the initial spectrum; and outputting data to a device, the data being based upon the step of calculating. The system includes a spectrum analyzer configured for producing the initial spectrum and a display device configured for displaying a color and hair color treatment instructions based on the data. An alternate embodiment includes a color mixing device configured for dispensing a hair color treatment based on the data.
c) Advice for determining process data for a cosmetic treatment process for treating hair on the head of a person, with a microprocessor, at least one storage containing at least one application program, a data input device, a data evaluation device, at least one process data output device, and a display device, wherein the device is provided as a battery-operated hand-held device, the storage or storages being contained in at least one optionally exchangeable module, the application program contains at least one data table and application texts which communicate with the data input device, the data evaluation device, the process data output device and the display device, a dialog menu management being provided via the display device as a data input device through use of a menu program, and in that data is entered through use of a cursor function.
d) A method to change the color of hair which includes measuring an initial reflectance spectrum of a sample of the hair and analyzing a contribution of a plurality of natural hair factors to the initial reflectance spectrum. The method also includes calculating a hair treatment based on another reflectance spectrum. A system to measure a reflectance spectrum of a sample includes an integrating sphere having a sampling port and an inner surface and a window disposed near to the sampling port. The window is configured for being placed in close contact with the sample.

The system also includes a light source configured to project light onto the sample via the window and a light detector configured to analyze light reflected from the inner surface to produce the reflectance spectrum of the sample. e) An apparatus for analyzing a sample hair mixture having a mixture of two hair colors and an overall spectrum representative of the two colors, comprising: a first color selector, configured to select a first spectrum representative of a first color in the hair mixture from a first group of at least one spectrum, and an iterative spectrum combiner, associated with the first color selector and configured to iteratively combine therewith a second spectrum representative of a second color in the hair mixture from a second group of spectra over the first spectrum, thereby to find an optimal combination of first and second spectrum which is a closest match to the overall spectrum. And f) a hair color analysis process comprising the steps of measuring with a measuring instrument the value of a plurality of color factors in the color of an individual's hair, providing an indicator having a plurality of hair color classifications defining ranges of said color factors, and comparing the plurality of color factors to the ranges of the color factors, to indicate a classification of hair color.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

### REFERENCE NUMBER LIST

- 1: Color consultation system
- 2: Device, data receiving
- 3: Device, input of color parameters
- 4: Display unit
- 5: Processor
- 6: Output device
- 7: Mixing device
- 8: Assortment
- 9: Color components
- 10: Granules
- 11: Powder
- 12: Container, peroxide
- 13: Transmitter system
- 14: Receiver system
- 15: Data
- 16: Storage
- 17: Processor
- 18, 19: Screen
- 20: Printer
- 21: Display
- 22: Collection
- 23: Index cards
- 24: Receptacle
- 25: Carousel
- 26: Container, color components
- 27: Valve
- 28: Control device
- 29: Outlet
- 30: Vessel

- 31: Keyboard
- 32: Pocket computer
- 33: Input key
- 34: Screen partition
- 35: Connection
- 36: USB device
- 37: Piston
- 38: Brush
- 39: Scale
- 40: Product receptacle
- 41: Internet connection

## Claims

1. Color consultation system for a hair salon, with which an existing color of human hair can be recognized and a hair color treatment can be prepared in order to change the color of the hair, consisting of
a measuring device (1) for detection of the hair color,
a unit (2) for receiving the data from the measuring device (1),
a device (3) for input of at least one color parameter,
a display unit (4) for display of a measurement parameter or a color parameter,
a processor (5) for calculation of the components of a desired color for the hair,
an output device (6) for output or display of the components, color components (9) prepared in granular (10), powder (11) or particle form, preferably without fillers, the measurement device (1) has a mobile unit for measuring the visible spectral range of the light reflected from the hair, and
a mixing device (7) is provided for mixing the hair color treatment or for preparation of the components of the hair color treatment,
or a modification that agglomerates the granular/powder or particle, preferably without fillers, for hair color to allow simple manual dosing of single application hair color.

2. Color consultation system according to claim 1, **characterized in that** the measuring device (1) transfers at least one parameter of the measurement of the hair color to the processor (5) by means of a transmitter system (13) and receiver system (14).

3. Color consultation system according to claim 1, **characterized in that** the color consultation system is designed for removal of an end of a strand of hair and for recognition of the hair color at a measuring device (1) connected to the processor (5).

4. Color consultation system according to claim 1 or claim 2, **characterized in that** either a portion of the spectral range, which preferably has wavelengths of 400 to 800 nm, or the entire spectral range is provided for measurement.

5. Color consultation system according to claim 1, **characterized in that** the unit (2) for receiving the data (15) from the measuring device (1) has a storage (16) and preferably an additional processor (17).

6. Color consultation system according to one of the claims 1 through 5, **characterized in that** the display unit (4) has a screen (18) or two screens (18, 19) for the display of a respective hair color treatment.

7. Color consultation system according to claim 1, **characterized in that** the measured values and/or the components of a desired color are compared to each other by means of a mathematical algorithm or a collection (22) of index cards (23).

8. Color consultation system according to claim 1, **characterized in that** the mixing device (7) has a plurality of individual containers (26) for receiving different hair color treatments or color components (9) and the components (9) can be dispensed in an amount of 0.03 to 1 g.

9. Color consultation system according to claim 8, **characterized in that** one valve (27) per container (26) is provided for opening and closing a downward facing outlet of the container (26), that a control device (28) is provided for operation of the valves (27), and that a collection unit (28) underneath the containers (26) serves for outputting the dispensed product through an outlet (29) into a vessel (30).

10. Color consultation system according to claim 8, **characterized in that** the mixing device (7) has a series of containers (26) with a respective piston (37) for emptying the container (26).
